# EUROPÄISCHE PATENTSCHRIFT

(11) **EP 2 193 726 B1**
(45) Veröffentlichungstag und Bekanntmachung des Hinweises auf die Patenterteilung: **06.08.2014**
(21) Anmeldenummer: 09177568.4
(22) Anmeldetag: 01.12.2009
(51) Int. Cl.: A23N 7/04

(54) **Messereinheit zum Schälen von langgestrecktem Schälgut**
Knife unit for peeling stretched peeled goods
Unité de couteaux destiné à éplucher des produits à éplucher étendus en longueur

(30) Priorität: 02.12.2008 DE 102008059912
(43) Veröffentlichungstag der Anmeldung: 09.06.2010
(73) Patentinhaber: Hepro GmbH, 33378 Rheda-Wiedenbrück (DE)
(72) Erfinder: Protte, Christoph, 33129, Delbrück (DE)
(74) Vertreter: Ostermann, Thomas

(56) Entgegenhaltungen:
- WO-A1-02/26062
- DE-A1- 1 779 448
- DE-A1- 2 235 104
- US-A- 4 430 931
- US-A- 4 679 499

## Beschreibung

Die Erfindung betrifft eine Messereinheit zum Schälen von langgestrecktem Schälgut nach dem Oberbegriff des Patentanspruchs 1.

Aus der US 4 679 499 A ist eine Schäleinheit zum Schälen von zylindrischem Gemüse bekannt. Die Schäleinheit weist eine Messereinheit mit zwei Messern auf, die jeweils an einem sich in Längsrichtung der Messer erstreckenden Messerhebel gelagert sind. Die Messer sind in Bezug auf den Träger schwenkbar gelagert und von einer Grundstellung, in der die Messerklingen einen geringen Abstand zueinander aufweisen und nicht an dem Gemüse anliegen, in eine Schälstellung verbringbar, in der die Messerklingen an gegenüberliegenden Seiten des Gemüses anlegbar sind. Die Messer sind über die Messerhebel an einem Parallelogrammgelenk derart gelagert, dass die Messerhebel in der Grundstellung und in der Schälstellung zueinander parallel angeordnet sind. Der Träger kann hierbei mittels einer Betätigungsvorrichtung transversal verschoben werden. Das Gemüse wird der Messereinheit in einer Längsrichtung des Gemüses vereinzelt zugeführt.

Aus der US 4 430 931 A ist bekannt, eine Mehrzahl von Messereinheiten mit zwei beabstandet zueinander angeordneten, um einen Drehpunkt drehbar gelagerte und an einem freien Ende Messerklingen aufweisenden Messerarme hintereinander winkelversetzt derart anzuordnen, dass das Schälgut nach Druchlauf der Mehrzahl von Messereinheiten vollumfänglich geschält ist.

Aus der DE 17 79 448 A1 ist eine Schälvorrichtung für Spargel mit einer Mehrzahl von Schälmodulen und Transporteinheiten bekannt. Schälmodule und Transporteinheiten sind hierbei alternierend hintereinander in Reihe angeordnet. Eine Transporteinheit weist insgesamt vier Transportmittel auf, welche jeweils in die Transportrichtung erstreckt sind. Den Transportmitteln zugeordnete Transportbänder sind elastisch ausgebildet und derart profiliert, dass sich eine kreisförmige Förderrinne bildet. Jedes Förderband besitzt hierbei einen Kreissegmentabschnitt von 90°. Eine Anpassung des Querschnitts der Förderrinne ist nur durch die Elastizität der Förderbänder möglich mit der Folge, dass Spargel unterschiedlicher Dicke transportiert werden kann. Dickeres Schälgut bzw. gebogenes Schälgut kann jedoch nicht transportiert werden. Ebenfalls sind die Schälmodule nicht zum Schälen von gebogenem Schälgut ausgebildet.

Aus der DE 296 05 512 U1 ist eine Spargelschäleinrichtung mit einer aus rotierend angetriebenen Transportrollen gebildeten Transporteinheit und mit einer Mehrzahl von in einer Transporteinrichtung hintereinander angeordneten Messereinheiten, die jeweils aus zwei paarweise angeordneten Messern gebildet sind, bekannt. Die Messer weisen jeweils einen Messerhebel auf, an dem eine Messerklinge drehbar gelagert ist. Die Messerklinge und der Messerhebel sind in Bezug auf einen ortsfesten Träger schwenkbar gelagert. Sie werden verschwenkt von einer Grundstellung, in der die Messer außer Eingriff sind, in eine Schälstellung, in der die Messer an dem durchlaufenden Spargel anliegen und diesen in Längsrichtung schälen. Zum Verbringen der Messer aus der Grundstellung in die Schälstellung ist eine Kolbenzylindereinheit vorgesehen, deren Ansteuerung durch berührungslose Taster, beispielsweise Lichtschranken, erfolgt. Aus der Schälstellung in die Grundstellung gelangen die Messer über Rückstellfedern. Um den durch die Messereinheit laufenden Spargel rundum zu schälen, ist die Mehrzahl von Messereinheiten in Transportrichtung hintereinander mit Winkelversatz zueinander angeordnet. Nachteilig an der bekannten Messereinheit ist, dass die Messerklingen in der Schälstellung zueinander einen Winkel einschließen, dessen Größe von dem Durchmesser des Spargels abhängen. Ferner lässt sich der Spargel, welches wie Gurken von Natur aus eine Krümmung aufweisen kann, aufgrund der Lagerung der Messer und deren Ansteuerung mit der bekannten Messereinheit nicht bzw. nur mit großem Verschnitt schälen.

Aufgabe der vorwiegenden Erfindung ist es, eine Messereinheit zum Schälen von langgestrecktem Schälgut derart weiterzubilden, dass das langgestreckte Schälgut, welches unterschiedliche Durchmesser, Krümmungen oder dergleichen aufweist, zuverlässig, gründlich und mit wenig Verschnitt geschält werden kann.

Zur Lösung der Aufgabe weist die Erfindung die Merkmale des Patentanspruchs 1 auf.

Der besondere Vorteil der Ereindung besteht darin, dass die Messer in der Grundstellung und in der Schälstellung winkelgleich zueinander orientiert angeordnet sind. Hierdurch liegen sie unabhängig vom Durchmesser des Schälguts an einer gleichen, durch die Anordnung der Messer konstruktiv vorbestimmten Anlageposition an dem langgestreckten Schälgut an. Durch das Vorsehen einer immer gleichen Anlageposition des Messers an dem langgestreckten Schälgut ist der von dem Messer geschälte Oberflächenabschnitt unabhängig vom Durchmesser oder der Krümmung des langgestreckten Schälguts exakt definiert. Dies ist insbesondere dann günstig, wenn eine Mehrzahl von Messereinheiten um die Transportrichtung winkelversetzt hintereinander angeordnet wird zum vollumfänglichen Schälen des langgestreckten Schälguts.

Nach einer bevorzugten Ausführungsform der Erfindung sind die Messer jeweils über mindestens zwei beabstandet zueinander angeordnete Schwenkarme mit dem ortsfesten Träger in einer Schwenkachse schwenkbar verbunden. Hierbei ist ein erster Endabschnitt jedes Schwenkarms schwenkbar an dem ortsfesten Träger angelenkt. Ein zweiter Endabschnitt des Schwenkarms ist schwenkbar an dem Messer angelenkt. Die schwenkbare Lagerung der Messer an dem ortsfesten Träger stellt eine - insbesondere im Vergleich zur translatorischen Stellbewegung - konstruktiv einfache Befestigungsart dar. Sie ist insofern besonders kostengünstig herstellbar.

Nach einer Weiterbildung der Erfindung können die Schwenkarme parallel zueinander orientiert sein bzw. eine gleiche Länge aufweisen. Vorteilhaft lässt sich hierdurch in konstruktiv besonders einfacher und kostengünstiger Weise eine winkelgleiche Orientierung der Messer in Bezug auf den ortsfesten Träger gewährleisten.

Nach einer Weiterbildung der Erfindung ist das Gelenk als ein Parallelogrammgelenk ausgebildet. Das Parallelogrammgelenk weist zwei parallel zueinander orientiert angeordnete Schwenkarme, einen die Schwenkarme an einer dem Messer zugewandten Seite derselben verbindenden Querlenker und einen parallel und beabstandet zu dem Querlenker angeordneten, die Schwenkarme an einer dem Messer abgewandten Seite derselben verbindenden Träger auf. Vorteilhaft ist hierbei, dass das Parallelogrammgelenk konstruktiv einfach aufgebaut ist und für das Messer eine Bewegung auf einer exakt vorherbestimmten Bahnkurve vorgibt. Die Kinematik des Messers ist über die Länge und Orientierung der parallelen Schwenkarme hinsichtlich der Bewegungskomponenten in zwei in der Schwenkebene gelegenen, zueinander orthogonalen Richtungen einstellbar. Das Verschwenken der Messer von der Grundstellung in die Schälstellung kann hierbei derart realisiert sein, dass sich primär der Abstand der Messer zueinander ändert, während der Abstand des Querlenkers zu dem Träger lediglich geringfügig variiert. Hierdurch ist es möglich, zum einen Durchmesservarianzen auszugleichen bzw. die Messereinheit auch für langgestrecktes Schälgut, welches aufgrund seiner natürlichen Wuchsform sehr unterschiedliche Durchmesser aufweisen kann, einzusetzen. Zum anderen können Krümmungen des Schälguts durch die Parallelogrammlagerung ebenfalls vorteilhaft ausgeglichen werden. Im Extremfall können beide Messer - wenn auch in unterschiedlichem Ausmaß - in der Schwenkebene richtungsgleich verschwenkt werden.

Nach einer Weiterbildung der Erfindung weisen die Messer jeweils eine Messerflanke auf, die in Längsrichtung des Messerhebels um eine erste Drehachse des Messers an dem Messerhebel drehbar gelagert ist und an der auf einer dem Messerhebel abgewandten Seite die Messerklinge gelagert ist. Die Messerklinge selbst kann hierbei drehbar um eine zweite Drehachse an der Messerflanke gehalten sein. Durch das Vorsehen einer Messerflanke, die zwischen der Messerklinge und dem Messerhebel angeordnet und im Bezug auf diese beiden Bauteile drehbar ausgestaltet ist, erfolgt das Schälen des langgestreckten Schälguts in besonders schonender Weise. Durch die zusätzliche Elastizität können beispielsweise lokale Ausbeulungen des Schälguts ausgeglichen werden. Ferner kann die Messerflanke als eine Leitfläche für das langgestreckte Schälgut dienen, die insbesondere beim Eintritt des Schälguts in die Messereinheit einen allmählichen Anstieg der von dem Messer auf das Schälgut wirkenden Kraft bewirkt. Das Schälgut wird hierdurch besonders schonend behandelt. Darüber hinaus werden Druckstellen oder Beschädigungen, die bei einem zu unmittelbaren Eingriff der Messerklingen insbesondere bei weichem Schälgut auftreten können, vermieden.

Nach einer Weiterbildung der Erfindung können die Messer und/oder die Schwenkarme symmetrisch bezüglich einer die Transportrichtung des Schälguts aufnehmenden und zu der Schwenkebene der Messer senkrecht orientierten Mittelebene der Messereinheit ausgebildet sein. Durch die symmetrische Ausführung der Messer und/oder der Schwenkarme kann die Anzahl der Bauteile weiter reduziert werden, so dass die Messereinheit besonders wirtschaftlich hergestellt werden kann. Darüber hinaus gewährleistet der symmetrische Aufbau im Bezug auf die Zuführrichtung des langgestreckten Schälguts, dass die Messer beidseits mit einer gleichen Kraft an das Schälgut drücken. Eine unterschiedliche seitliche Beaufschlagung des Schälguts wird hierdurch vermieden, und es wirken auf das Schälgut keinerlei Querkräfte, die zu einer Beschädigung, beispielsweise einem Bruch, des Schälguts führen können.

Nach einer Weiterbildung der Erfindung kann eine Halteeinrichtung zur Positionierung der Messer in einer von der vertikalen Orientierung abweichenden Anordnung zwischen dem Messer und dem ortsfesten Träger und/oder einem anderen ortsfesten Bauteil angeordnet sein. Hierbei verfügt die Halteeinrichtung über elastische Mittel, mittels derer die Messer in der Schwenkebene schwenkbar gehalten sind. Vorteilhaft ist hierdurch der Aufbau einer Schälvorrichtung mit einer Mehrzahl von hintereinander angeordneten, in Bezug auf die Transportrichtung winkelversetzt positionierten Messereinheiten in konstruktiv besonders einfacher Art und Weise möglich. Bei dem elastischen Mittel kann es sich beispielsweise um Federelemente handeln, so dass die Positionierung in einer von der vertikalen Orientierung abweichenden Anordnung ausschließlich über passive Bauelemente und somit ohne Aktoren oder andere Stellelemente bewirkt wird. Die Gesamtkonstruktion ist hierbei besonders robust und zuverlässig. Zudem ist die Lösung im Vergleich zu Aktoren aufweisenden Alternativen kostengünstig.

Nach einer Weiterbildung der Erfindung ist zum selbsttätigen Rückstellen der Messer von der Schälstellung in die Grundstellung ein Rückstellelement vorgesehen. Das Rückstellelement kann hierbei als eine Rückstellfeder ausgebildet sein, die zwischen den Messern angeordnet ist und deren zwei Endabschnitte jeweils an einem der beiden Messer angelenkt sind. Indem auch hier eine Feder, und damit ein passives Bauelement zur Rückstellung der Messer verwendet wird, kann auf Aktoren verzichtet werden. Vorteilhaft sinken hierdurch zum einen die Kosten. Zum anderen verbessert sich die Zuverlässigkeit sowie die Wartbarkeit der Messer.

Nach einer Weiterbildung der Erfindung ist der Abstand der Messerklingen zueinander in der Grundstellung geringer als in der Schälstellung. Vorteilhaft kann hierdurch bewirkt werden, dass das in die Messereinheit eintretende Schälgut selbst die Messer aus der Grundstellung in die Schälstellung verbringt. Somit kann auch hier auf aktive Bauelemente verzichtet werden. Insgesamt ist es somit möglich, die Messereinheit komplett passiv auszubilden und auf aktive Stellelemente vollständig zu verzichten. Unter wirtschaftlichen Gesichtspunkten ist dies besonders vorteilhaft, da auf das Zuführen von Hilfsenergie, beispielsweise elektrischer oder pneumatischer Energie, zu der Messereinheit vollständig verzichtet werden kann.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Darstellung einer Messereinheit in einer Grundstellung,
- Figur 2: eine perspektivische Darstellung der Messereinheit gemäß Figur 1 in einer Schälstellung,
- Figur 3: eine perspektivische Darstellung der in einer Schneideinheit verbauten Messereinheit gemäß Figur 1 und
- Figur 4: eine perspektivische Darstellung der Schneideinheit gemäß Figur 3 beim Schälen eines langgestreckten Schälguts.

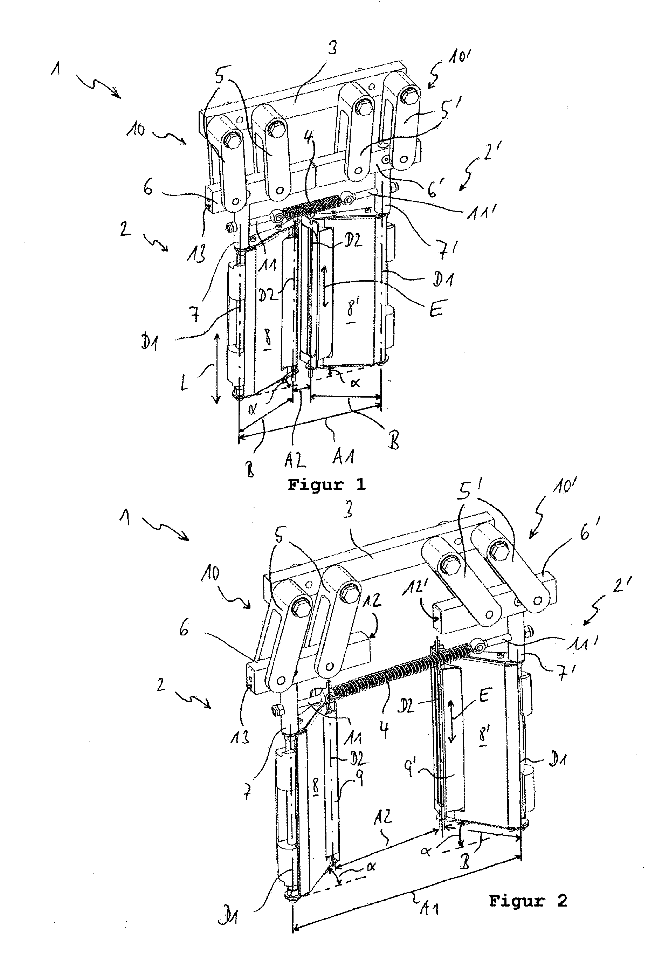

Eine Messereinheit 1 zum Schälen von langgestrecktem Schälgut 30, beispielsweise Gurken, Kürbis, Maniok, Zucchini, Rettich, Karotten, Casavas oder dergleichen, besteht gemäß der Figuren 1 und 2 im Wesentlichen aus einem ersten Messer 2, einem zweiten Messer 2', einem ortsfesten Träger 3, einer zwischen dem ersten Messer 2 und dem zweiten Messer 2' angeordneten Rückstellfeder 4 sowie vier Schwenkarmen 5, 5'. Die Messereinheit 1 wird üblicherweise in eine Schneideinheit 20 montiert, die wiederum Teil einer das langgestreckte Schälgut 30 im industriellen Rahmen verarbeitenden Schälvorrichtung ist. In der Schälvorrichtung ist hierbei eine Mehrzahl von Schneideinheiten in einer Transportrichtung T hintereinander angeordnet. Die Messereinheiten 1 der Schneideinheiten 20 sind hierbei typischerweise baugleich, aber um die Transportrichtung T winkelversetzt angeordnet. Auf diese Weise kann das langgestreckte Schälgut 30 in der Schälvorrichtung vollumfänglich geschält werden.

Die Schwenkarme 5, 5' sind paarweise jeweils einem Messer 2, 2' zugeordnet. Die beiden dem ersten Messer 2 zugeordneten Schwenkarme 5 sind mit einem ersten, dem ersten Messer 2 abgewandten Endabschnitt drehbar an dem ortsfesten Träger 3 gehalten. Der zweite Endabschnitt der Schwenkarme 5 ist drehbar mit dem ersten Messer 2 verbunden. Die beiden dem ersten Messer 2 zugeordneten Schwenkarme 5 sind hierbei baugleich ausgeführt. Sie haben die gleiche Länge und sind zueinander parallel sowie beabstandet angeordnet. Die Anlenkung des zweiten Messers 2' über den zweiten Schwenkarm 5' an dem ortsfesten Träger 3 erfolgt in analoger Weise. Das erste Messer 2 und das zweite Messer 2' sind hierbei an dem ortsfesten Träger 3 symmetrisch in Bezug auf eine zwischen den Messern 2, 2' verlaufende Mittelebene M gehalten und in einer zu der Mittelebene M orthogonalen Schwenkebene S schwenkbar gelagert.

Das erste Messer 2 weist einen Querlenker 6, einen Messerhebel 7, eine Messerflanke 8 und eine Messerklinge 9 auf. Der Querlenker 6 bildet das dem ortsfesten Träger 3 zugewandte Ende des ersten Messers 2. An dem Querträger 6 greifen die dem ortsfesten Träger 3 abgewandten Endabschnitte der Schwenkarme 5 an. Der Querlenker 6 erstreckt sich hierbei parallel zu dem ortsfesten Träger 3, so dass der Querlenker 6 mit dem ortsfesten Träger 3 sowie den beiden parallel zueinander angeordneten, den ortsfesten Träger 3 und den Querlenker 6 verbindenden Schwenkarme 5 ein Parallelogrammgelenk 10 bildet.

Das zweite Messer 2' weist wie das erste Messer 2 einen Querlenker 6', einen Messerhebel 7', eine Messerflanke 8' und eine Messerklinge 9' auf. Das zweite Messer 2' ist hierbei analog zum ersten Messer 2, jedoch seitenverkehrt bezüglich der Mittelebene M aufgebaut. Insbesondere bildet auch hier der Querlenker 6' zusammen mit dem ortsfesten Träger 3 und den beiden parallel zueinander angeordneten, den ortsfesten Träger 3 und den Querlenker 6 verbindenden Schwenkarme 5' ein Parallelogrammgelenk 10'.

Da das zweite Messer 2' analog zum ersten Messer 2 aufgebaut und lediglich bezüglich der Mittelebene M gespiegelt ausgeführt ist, wird im Folgenden lediglich das erste Messer 2 beschrieben. Die Ausführungen gelten - sofern nichts anderes beschrieben ist - analog auch für das zweite Messer 2'.

Auf der dem ortsfesten Träger 3 abgewandten Seite des Querträgers 6 ragt von demselben senkrecht der Messerhebel 7 in eine Längsrichtung L desselben ab. Der Messerhebel 7 ist hierbei zwischen den Lagerpunkten der parallelen Schwenkarme 5 an dem Querträger 6 drehfest gehalten.

An dem dem Querlenker 6 abgewandten Endbereich des Messerhebels 7 ist die Messerflanke 8 um eine erste, sich in Längsrichtung L des Messerhebels 7 erstreckenden Drehachse D1 drehbar mit dem Messerhebel 7 verbunden. Die Messerflanke 8 ist hierbei flächig ausgebildet und ragt von dem Messerhebel 7 in Richtung des zweiten Messers 2' ab.

An dem dem Messerhebel 7 abgewandten und dem zweiten Messer 2' zugewandten Ende der Messerflanke 8 ist die Messerklinge 9 um eine zweite Drehachse D2 drehbar gehalten. Die Längsrichtung L des Messerhebels 7 ist parallel zu der Erstreckungsrichtung E der Messerklingen 9 orientiert und um die Breite B der Messerflanke beabstandet zu dieser vorgesehen.

An dem dem Querlenker 6 zugewandten Endabschnitt weist der Messerhebel 7 ein als eine Öse ausgebildetes Befestigungsmittel 11 zur Anbindung der Rückstellfeder 4 auf. Die Rückstellfeder 4 ist hierbei mit einem ersten Ende an dem Befestigungsmittel 11 des ersten Messers 2 und mit einem zweiten Ende an einem Befestigungsmittel 11' des zweiten Messers 2' gehalten.

Die Messerhebel 7, 7' weisen zueinander einen Abstand A1 auf, der in der Grundstellung gemäß Figur 1 minimal ausgebildet ist. Ferner besitzen die Messerklingen 9, 9' zueinander den Abstand A2, der in der Grundstellung ebenfalls maximal ist. Die Messerhebel 7, 7' sind hierbei zueinander ebenso parallel angeordnet wie die Messerklingen 9, 9'. Die Messerflanken 8, 8' sind aus der Schwenkebene S derart herausgeschwenkt, dass ihre die Messerklingen 9, 9' haltenden Endbereiche um den Öffnungswinkel α in Transportrichtung T geschwenkt sind. Die um die erste Drehachse D1 drehbar an dem Messerhebel gehaltenen Endbereiche liegen hierbei in der Schwenkebene S.

In der Grundstellung der Messereinheit 1 liegt der Querlenker 6 des ersten Messers 2 mit einer dem zweiten Messer 2' zugewandten Stirnseite 12 flächig an einer dem ersten Messer 2 zugewandten Stirnseite 12' des Querlenkers 6' des zweiten Messers 2' an. Hierbei ist die zwischen den Messern 2, 2' angeordnete Rückstellfeder 4 nicht oder nur im geringen Maße gespannt. Die Schwenkarme 5 des ersten Messers 2 sind in Bezug auf die Schwenkarme 5' des zweiten Messers 2' derart angestellt orientiert, dass der Abstand der an dem ortsfesten Träger 3 gehaltenen ersten Endabschnitte größer ist als der Abstand der an den Querlenkern 6, 6' gehaltenen zweiten Endabschnitte.

Die Messerflanken 8, 8' nehmen ihre Grundstellung in Bezug auf den Messerhebel 7, 7' mit Hilfe von nicht dargestellten Drehfedern ein, die koaxial zur ersten Drehachse D1 gelagert sind. Ein Verschwenken der Messerflanken 8, 8' aus der Grundstellung in Richtung der Schwenkebene S oder darüber hinaus in negativer Transportrichtung T wird über nicht dargestellte Anschläge verhindert.

In der Schälstellung gemäß Figur 2 ist der Abstand A1 der Messerhebel 7, 7' sowie der Abstand A2 der Messerklingen 9, 9' größer als in der Grundstellung. Die Stirnseiten 12, 12' der Querlenker 6, 6' liegen nicht aneinander an. Die Querlenker 6, 6' sind in der Schälstellung weiterhin parallel zum ortsfesten Träger 3 orientiert, jedoch ist der Abstand zwischen dem Querlenker 6, 6' und dem ortsfesten Träger 3 in der Schälstellung gemäß Figur 2 geringer als in der Grundstellung gemäß Figur 1. Dieses geometrische Merkmal der Messereinheit 1 ist hierbei durch die kinematische Gestaltung des Parallelogrammgelenks 10 sowie die Geometrie des langgestreckten Schälguts 30 festgelegt. Bei einer abweichenden Gestaltung und Dimensionierung der Schwenkarme 5, 5' und/oder der Querlenker 6, 6' kann der Abstand der Querlenker 6, 6' vom ortsfesten Träger 3 in der Schälstellung größer oder gleich dem Abstand dieser Bauteile in der Grundstellung sein.

Ferner ist die Rückstellfeder 4 in der Schälstellung gestreckt, so dass eine Rückstellkraft auf die Befestigungsmittel 11, 11' der Messer 2, 2' ausgeübt wird, über die diese zurück in die Grundstellung verbringbar sind. Die Messerflanken 8, 8' sind in Bezug auf die Schwenkebene S stärker angestellt als in der Grundstellung, das heißt der Öffnungswinkel α ist in der Schälstellung größer als in der Grundstellung. Der Abstand A2 der Messerklingen 9, 9' ist beim Verbringen der Messer 2, 2' von der Grundstellung in die Schälstellung daher stärker angewachsen als der Abstand A1 der Messerhebel 7, 7'.

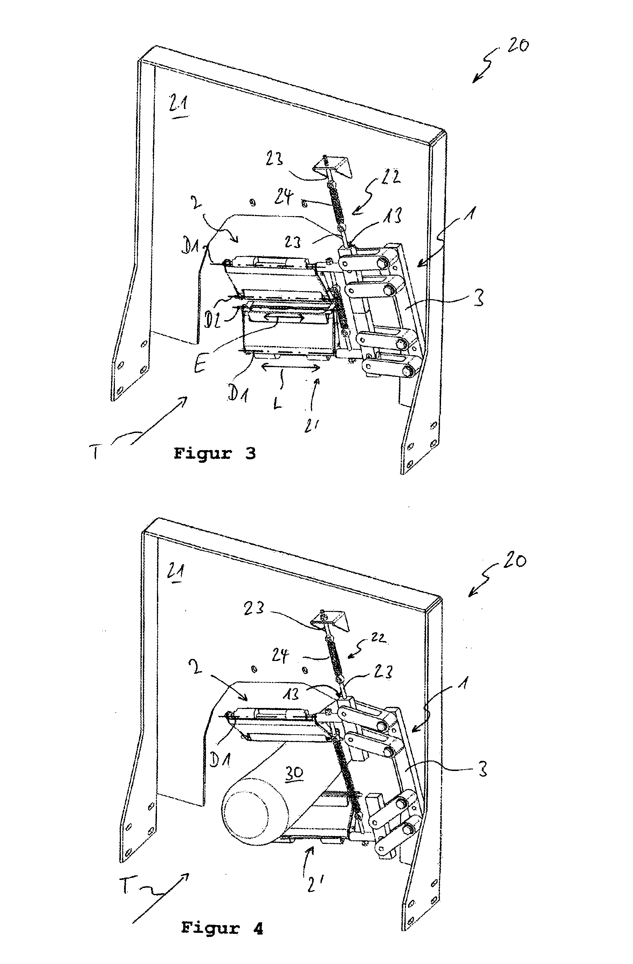

Die Messereinheit 1 ist gemäß Figur 3 Teil einer Schneideinheit 20. Die Messereinheit 1 ist in einer von der vollständig vertikalen bzw. vollständigen horizontalen Orientierung abweichenden, gegenüber der Horizontalen und Vertikalen geneigten Anordnung verbaut. Der ortsfeste Träger 3 der Messereinheit 1 ist mit einem ebenfalls ortsfest montierten Tragelement 21 der Schneideinheit 20 verbunden. Ferner ist eine der Stirnseite 12 gegenüberliegende zweite Stirnseite 13 des Querlenkers 6 über eine Halteeinrichtung 22 mit dem Tragelement 21 der Schneideinheit 20 verbunden. Die Halteeinrichtung 22 weist hierbei zwei Befestigungsmittel 23 und eine zwischen den zwei Befestigungsmitteln 23 angeordnete Spiralfeder 24 auf. Die beiden Befestigungsmittel 23 sind ösenförmig ausgebildet. Sie sind zum einen an der Stirnseite 13 des Querlenkers 6 und zum anderen an dem ortsfesten Tragelement 21 befestigt. Die Spiralfeder 24 ist derart dimensioniert und vorgespannt, dass die Messereinheit 1 in der dargestellten Einbauposition unter Einwirkung der Schwerkraft symmetrisch zur Mittelebene M aufgebaut ist.

Zum Schälen eines langgestreckten Schälguts 30 mittels der in der Schneideinrichtung 20 verbauten Messereinheit 1 werden die Messer 2, 2' der Messereinheit 1 aus der Grundstellung in die Schälstellung verschwenkt. Dies geschieht selbsttätig durch das langgestreckte Schälgut 30 selbst, welches in eine Transportrichtung T gefördert wird und mit einem kuppelförmigen Endabschnitt entlang der als eine Leitfläche dienenden Messerflanke 8, 8' in die Messereinheit 1 eintritt.

Die Messer 2, 2' der Messereinheit 1 werden gegen die Kraft der Rückstellfeder 4 auseinandergedrückt. Die Höhe der Kraft hängt von dem Abstand A1 der Messer und damit von dem Durchmesser des langgestreckten Schälguts 20 ab. Durch die Rückstellfeder 4 sowie die nicht dargestellten Drehfedern zur Vorspannung der Messerflanken 8, 8' in Bezug auf die Messerhebel 7, 7' werden die Messerklingen 9, 9' gegen die Oberfläche des langgestreckten Schälguts 30 gedrückt. Die Federkräfte sind hierbei so dimensioniert, dass das langgestreckte Schälgut 30 während des Schälens nicht beschädigt wird.

Aufgrund der Lagerung der Messer über das Parallelogrammgelenk 12 ist während des Schälens zu jeder Zeit eine parallele Orientierung der Messerklingen 9, 9' zueinander gewährleistet. Dies gilt insbesondere auch dann, wenn das langgestreckte Schälgut 30 eine Krümmung aufweist, aufgrund derer die Messer 2, 2' in unterschiedlichem Maße von der Mittelebene M weg nach außen gedrückt werden. Die schwimmende Lagerung sorgt dafür, dass die Klingen 9, 9' der gebogenen Form des langgestreckten Schälguts 30 folgen. Gleichzeitig ist die Schneidkraft, mit der die Messerklingen 9, 9' auf das langgestreckte Schälgut 30 drücken, aufgrund der Anordnung der Rückstellfeder 4 und der nicht dargestellten Drehfedern unabhängig von der absoluten Position der Messer. Die Anpresskraft wird lediglich über den Abstand A1 der Messerhebel 7, 7' und den Öffnungswinkel α der Flanken 8, 8' bestimmt. Sie ist infolge der schwimmenden Lagerung der Messer 2, 2' und der Anordnung der Rückstellfeder 4 zu beiden Seiten des langgestreckten Schälguts 30 gleich groß.

Zum Aufbau einer Schälvorrichtung zum Schälen von langgestrecktem Schälgut können eine Mehrzahl von Schneideinheiten 20 zwischen Transporteinheiten angeordnet werden, die das langgestreckte Schälgut in einer Längserstreckung desselben in die Transportrichtung T fördern. Einer ersten Schneideinheit 20 ist dann in Transportrichtung T eine erste Transporteinheit vor- und eine zweite Transporteinheit nachgelagert. An die zweite Transporteinheit schließt sich eine zweite Schneideinheit 3 an, an diese eine dritte Transporteinheit usw., so dass die Mehrzahl von Schneideinheiten 20 und die Transporteinheiten alternierend hintereinander angeordnet sind.

Die in der Mehrzahl von Schneideinheiten 20 verbauten Messereinheiten 1 sind hierbei um die Transportrichtung T winkelversetzt zueinander angeordnet, so dass das langgestreckte Schälgut nach dem Durchlaufen der Schälvorrichtung vollumfänglich geschält ist. Die Transportrichtung T steht hierbei senkrecht auf der Schwenkebene S der Messer 2, 2' und verläuft in der Mittelebene M der Messereinheit 1.

Die Transporteinheiten, die unmittelbar vor und hinter einer Schneideinheit 20 angeordnet sind, weisen hierbei einen Abstand auf, der lediglich so groß ist, dass das langgestreckte Schälgut 30 vor dem Verlassen der in Transportrichtung T hinteren Transporteinheit in der in Transportrichtung T vorderen Transporteinheit gehalten wird. Auf diese Weise kann auf zusätzliche Haltemittel im Bereich der Messereinheit 1 verzichtet werden.

Nach einer alternativen nicht dargestellten Ausführungsform der Erfindung können die Messerklingen 9, 9' in Bezug auf den Messerhebel 7, 7' in einer von der Parallelen abweichenden Orientierung angeordnet sein. Beispielsweise kann die Erstreckungsrichtung E der Messerklingen 9, 9' senkrecht zu der Längsrichtung L der Messer 2, 2' orientiert sein. In diesem Fall können die Messer 2, 2' derart orientiert sein, dass die Schwenkebene S die Transportrichtung T aufnimmt. Die Messer 2, 2' werden dann weiter in der Schwenkebene S verschwenkt, jedoch erstreckt sich ihre Längsrichtung L nicht mehr senkrecht, sondern zum Beispiel parallel zur Transportrichtung T.

Nach einer weiteren nicht dargestellten Ausführungsform können die Messer 2, 2' und/oder die Messereinheit 1 über einen Wasseranschluss zur Säuberung der Messer 2, 2' während des Schälens verfügen.

Nach einer alternativen Ausführungsform der Erfindung kann die Schwenkbewegung der Messer 2, 2' in der Schwenkebene S und/oder die Schwenkbewegung der Messerflanken 8, 8' um die erste Drehachse D1 und/oder die Drehbewegung der Messerklingen 9, 9' um die zweite Drehachse D2 durch Anschläge begrenzt sein. Diese Begrenzung der Schwenk- bzw. Drehbewegung schützt die als Dreh- bzw. Linearfeder ausgeführten Rückstellelemente 4, 24 vor Überlastung. Darüber hinaus kann eine Kollision der ausgelenkten Bauelemente mit zu ihnen benachbarten Bauteilen vermieden werden.

Nach einer alternativen Ausführungsform der Erfindung können die Messerklingen 9, 9' bogenförmig ausgeführt sein.

Sie weisen hierbei eine konkave Form auf, die sich an die gebogene Oberfläche des langgestreckten Schälguts 30 in besonders günstiger Form anlehnt und insofern die Schnittbreite erhöht und/oder den Verschnitt reduziert. Durch das Vorsehen gebogener Messerklingen 9, 9' kann in Schälvorrichtungen die Anzahl der Schneideinheiten reduziert werden.

## Patentansprüche

1. Messereinheit zum Schälen von langgestrecktem Schälgut (30), insbesondere Gurken, mit zwei beabstandet zueinander angeordneten Messern (2, 2'), denen das langgestreckte Schälgut (30) mittels einer Transporteinheit in einer in Längsrichtung des Schälguts (30) verlaufende Transportrichtung (T) sequentiell zuführbar ist, wobei die Messer (2, 2') jeweils einen sich in eine Längsrichtung (L) des Messers (2, 2') erstreckenden Messerhebel (7, 7') aufweisen, wobei die Messer (2, 2') in Bezug auf einen Träger (3) schwenkbar gelagert sind zwischen einer Grundstellung, in der die Messerklingen (9, 9') nicht an dem Schälgut (30) anliegen, und einer Schälstellung, in der die Messerklingen an gegenüberliegenden Seiten an dem Schälgut anliegen, und wobei die Messer (2, 2') an dem Träger (3) über ein Gelenk derart gelagert sind, dass die Messerhebel (7, 7') in der Grundstellung und in der Schälstellung parallel versetzt zueinander orientiert angeordnet sind, **dadurch gekennzeichnet, dass** die Messer (2, 2') eine in Bezug auf den Messerhebel (7, 7') drehbar gelagerte Messerklinge (9, 9') aufweisen und dass der Träger (3) ortsfest angeordnet ist.

2. Messereinheit nach Anspruch 1, **dadurch gekennzeichnet, dass** die Messer (2, 2') jeweils über mindestens zwei beabstandet zueinander angeordnete Schwenkarme (5, 5') mit dem ortsfesten Träger (3) in einer Schwenkebene (S) schwenkbar verbunden sind, wobei ein erster Endabschnitt jedes Schwenkarms (5, 5') an dem ortsfesten Träger (3) schwenkbar angelenkt ist und wobei ein zweiter Endabschnitt der Schwenkarme (5, 5') an dem Messer (2, 2') schwenkbar angelenkt ist.

3. Messereinheit nach Anspruch 2, **dadurch gekennzeichnet, dass** die jeweils dem Messer (2, 2') zugeordneten wenigstens zwei Schwenkarme (5, 5') parallel zueinander orientiert sind und/oder eine gleiche Länge aufweisen.

4. Messereinheit nach Anspruch 2 oder 3, **dadurch gekennzeichnet, dass** das Gelenk als ein Parallelogrammgelenk (10) ausgebildet ist mit zwei parallel zueinander orientiert angeordneten Schwenkarmen (5, 5'), mit einem die Schwenkarme (5, 5') an einer dem Messer (2, 2') zugewandten Seite derselben verbindenden Querlenker (6, 6') und mit einem parallel und beabstandet zu dem Querlenker (6, 6') angeordneten, die Schwenkarme (5, 5') an einer dem Messer (2, 2') abgewandten Seite derselben verbindenden Träger (3).

5. Messereinheit nach einem der Ansprüche 1 bis 4, **dadurch gekennzeichnet, dass** die Messer (2, 2') jeweils eine Messerflanke (8, 8') aufweist, die in Längsrichtung (L) des Messerhebels (7, 7') um eine erste Drehachse (D1) des Messers (2, 2') an dem Messerhebel (7, 7') drehbar gelagert ist und an der auf einer dem Messerhebel (7, 7') abgewandten Seite die Messerklinge (9, 9') gelagert ist.

6. Messereinheit nach Anspruch 5, **dadurch gekennzeichnet, dass** die Messerklinge (9, 9') drehbar um eine zweite Drehachse (D2) an der Messerflanke (8, 8') gehalten ist.

7. Messereinheit nach Anspruch 6, **dadurch gekennzeichnet, dass** die erste Drehachse (D1) und die zweite Drehachse (D2) parallel orientiert sind.

8. Messereinheit nach einem der Ansprüche 1 bis 7, **dadurch gekennzeichnet, dass** eine Halteeinrichtung (22) zur Positionierung der Messer (2, 2') in einer von der vertikalen Orientierung abweichenden Anordnung zwischen einem der zwei Messer (2, 2') und dem ortsfesten Träger (3) und/oder einem anderen ortsfesten Tragelement (21) angeordnet ist, wobei die Halteeinrichtung (22) über elastische Mittel verfügt derart, dass die Messer (2, 2') in der Schwenkebene (S) schwenkbar gehalten sind.

9. Messereinheit nach Anspruch 8, **dadurch gekennzeichnet, dass** als elastische Mittel Federelemente (24) vorgesehen sind.

10. Messereinheit nach einem der Ansprüche 1 bis 9, **dadurch gekennzeichnet, dass** ein Rückstellelement zum selbsttätigen Rückführen der Messer (2, 2') von der Schälstellung in die Grundstellung vorgesehen ist.

11. Messereinheit nach Anspruch 10, **dadurch gekennzeichnet, dass** das Rückstellelement als eine Rückstellfeder (4) ausgebildet ist, die zwischen den Messern (2, 2') angeordnet ist und deren zwei Endabschnitte jeweils mit einem der zwei Messer (2, 2') verbunden sind.

12. Messereinheit nach einem der Ansprüche 1 bis 11, **dadurch gekennzeichnet, dass** ein Rückstellelement vorgesehen ist zur selbsttätigen Rückstellung der Messerklingen (9, 9') in die Grundstellung und/oder dass ein Rückstellelement vorgesehen ist zur selbsttätigen Rückstellung der Messerflanken (8, 8') in die Grundstellung.

13. Messereinheit nach einem der Ansprüche 4 oder 5 bis 12, wenn von Anspruch 4 anbhängig, **dadurch gekennzeichnet, dass** der Querlenker (6, 6') sich senkrecht zur Längsrichtung (L) des Messerhebels (7, 7') erstreckt.

14. Messereinheit nach einem der Ansprüche 1 bis 13, **dadurch gekennzeichnet, dass** die Erstreckungsrichtung (E) der Messerklingen (9, 9') senkrecht zur Transportrichtung (T) des Schälguts orientiert ist.

15. Verwendung einer Messereinheit gemäß einem der Ansprüche 1 bis 14 in einer Schälvorrichtung zum Schälen von langgestrecktem Schälgut (30), insbesondere Gurken, mit einer Mehrzahl von Schneideinheiten (20), die um die Transportrichtung (T) winkelversetzt angeordneten Messereinheiten (1) aufweisen, und mit einer Mehrzahl von Transporteinheiten zum Transportieren des langgestreckten Schälguts (30) in die Transportrichtung (T), wobei die Mehrzahl von Schneideinheiten (20) und die Mehrzahl von Transporteinheiten in Transportrichtung (T) alternierend hintereinander angeordnet sind.

## Claims

1. A knife unit for peeling stretched peeled goods (30), particularly cucumbers, having two knives (2, 2') that are spaced apart from each other, to which knives the stretched peeled goods (30) can be sequentially supplied by means of a transport unit in a transport direction (T) extending in the longitudinal direction of the peeled goods (30), wherein the knives (2, 2') each have a knife lever (7, 7') extending in a longitudinal direction (L) of the knife (2, 2'), wherein the knives (2, 2') are supported, with respect to a carrier (3), such that they can swivel between a normal position, in which the knife blades (9, 9') do not rest on the peeled goods (30), and a peeling position, in which the knife blades rest on the peeled goods on opposite sides thereof, and wherein the knives (2, 2') are supported on the carrier (3) by means of a joint such that the knife levers (7, 7') are arranged, in the normal position and in the peeling position, such that they are offset in parallel with respect to each other, **characterized in that** the knives (2, 2') have a knife blade (9, 9') that is pivoted with respect to the knife lever (7, 7'), and that the carrier (3) is arranged such that it is stationary.

2. The knife unit according to claim 1, **characterized in that** each of the knives (2, 2') is connected, by means of at least two swivel arms (5, 5'), to the stationary carrier (3) in a swiveling plane (S) such that the knives can swivel, said swivel arms being spaced apart from each other, wherein a first end section of each swivel arm (5, 5') is hinged on the stationary carrier (3) and wherein a second end section of the swivel arms (5, 5') is hinged on the knife (2, 2').

3. The knife unit according to claim 2, **characterized in that** the at least two swivel arms (5, 5') associated with the knife (2, 2') at a time are oriented such that they are parallel to each other and/or have a same length.

4. The knife unit according to claim 2 or 3, **characterized in that** the joint is designed as a parallelogram joint (10) having two swivel arms (5, 5') arranged such that they are oriented such that they are parallel to each other, having a transverse link (6, 6') connecting the swivel arms (5, 5') on a side of the swivel arms that faces the knife (2, 2'), a having a carrier (3) connecting the swivel arms (5, 5') on a side of the swivel arms that faces away from the knife (2, 2'), said carrier (3) being arranged such that it is parallel to and spaced apart from the transverse link (6, 6').

5. The knife unit according to any one of claims 1 to 4, **characterized in that** the knives (2, 2') each have a knife flank (8, 8') that is pivoted on the knife lever (7, 7') about a first axis of rotation (D1) of the knife (2, 2') in the longitudinal direction (L) of the knife lever (7, 7') and on which the knife blade (9, 9') is supported on a side that faces away from the knife lever (7, 7').

6. The knife unit according to claim 5, **characterized in that** the knife blade (9, 9') is held on the knife flank (8, 8') such that it is rotatable about a second axis of rotation (D2).

7. The knife unit according to claim 6, **characterized in that** the first axis of rotation (D1) and the second axis of rotation (D2) are oriented such that they are parallel to each other.

8. The knife unit according to any one of claims 1 to 7, **characterized in that** a holding device (22) for positioning the knives (2, 2') in an arrangement that deviates from the vertical orientation is arranged between one of the two knives (2, 2') and the stationary carrier (3) and/or another stationary supporting element (21), wherein the holding device (22) has such elastic means that the knives (2, 2') are held in the swiveling plane (S) such that they can swivel.

9. The knife unit according to claim 8, **characterized in that** spring elements (24) are provided as elastic means.

10. The knife unit according to any one of claims 1 to 9, **characterized in that** a return element for the automatic retraction of the knives (2, 2') from the peeling position to the normal position is provided.

11. The knife unit according to claim 10, **characterized in that** the return element is designed as a return spring (4) that is arranged between the knives (2, 2') and whose two end sections are connected to one of the two knives (2, 2') at a time.

12. The knife unit according to any one of claims 1 to 11, **characterized in that** a return element for the automatic return of the knife blades (9, 9') to the normal position is provided and/or that a return element for the automatic return of the knife flanks (8, 8') to the normal position is provided.

13. The knife unit according to any one of claims 4 or 5 to 12 when dependent on claim 4, **characterized in that** the transverse link (6, 6') extends perpendicular to the longitudinal direction (L) of the knife lever (7, 7').

14. The knife unit according to any one of claims 1 to 13, **characterized in that** the direction (E) in which the knife blades (9, 9') extend is oriented perpendicular to the transport direction (T) of the peeled goods.

15. Use of a knife unit according to any one of claims 1 to 14 in a peeling device for peeling stretched peeled goods (30), particularly cucumbers, having a plurality of cutting units (20) that have knife units (1) that are arranged around the transport direction (T) such that they are offset at angles, and having a plurality of transport units for transporting the stretched peeled goods (30) in the transport direction (T), wherein the plurality of cutting units (20) and the plurality of transport units are arranged one behind the other in an alternating manner in the transport direction (T).

## Revendications

1. Ensemble de couteaux pour éplucher un produit à éplucher (30) allongé, en particulier des concombres, avec au moins deux couteaux (2, 2'), disposés à distance l' un de l'autre, a uxq uels, a u moyen d' une unité de transport, le produit à éplucher (30) allongé peut être amené séquentiellement, dans une direction de transport (T) orientée dans le sens longitudinal du produit à éplucher (30), sachant que les couteaux (2, 2') présentent chacun un levier de co utea u (7, 7') qui s'étend dans une direction longitudinale (L) du couteau (2, 2'), les co utea ux (2, 2') étant montés à pivotement, par rapport à un support (3), entre une position de base, dans laquelle les lames de couteaux (9, 9') ne portent pas contre le produit à éplucher (30), et une position d'épluchage, dans laquelle les lames de couteaux portent, sur des côtés opposés, contre le produit à éplucher (30), et sachant que les couteaux (2, 2') sont montés sur le support (3), par l'intermédiaire d' une articulation, de telle manière que les leviers de couteaux (7, 7') soient décalés parallèlement l' un par rapport à l'autre dans la position de base et dans la position d'épluchage, **caractérisé en ce que** les co utea ux (2, 2') présentent une lame de couteau (9, 9') montée à pivotement par rapport au levier de couteau (7, 7') et que le support (3) est fixe.

2. Ensemble de couteaux selon la revendication 1, **caractérisé en ce que** les co utea ux (2, 2') sont reliés à pivotement, dans un plan de pivotement (S), au support fixe (3) par l'intermédiaire d' a u moins de ux bras de pivotement (5, 5') disposés à distance l' un de l'autre, sachant qu' une première section d'extrémité de chaque bras de pivotement (5, 5') est articulée à pivotement sur le support fixe (3) et qu' une deuxième section d'extrémité des bras de pi votement (5, 5') est articulée à pi votement sur le couteau (2, 2').

3. Ensemble de couteaux selon la revendication 2, **caractérisé en ce que** les au moins deux bras de pivotement (5, 5') respectivement associés aux couteaux (2, 2') sont orientés parallèlement l' un par rapport l'autre et / ou présentent la même longueur.

4. Ensemble de couteaux selon revendication 2 ou 3, **caractérisé en ce que** l'articulation est réalisée sous la forme d' un parallélogramme articulé (10) qui est doté de de ux bras de pi votement (5, 5') orientés parallèlement l'un par rapport à l'autre, d' un bras transversal (6, 6') qui relie les bras de pivotement (5, 5') sur une face de ceux-ci dirigée vers le co utea u (2, 2'), et d' un s uppor t (3) qui, disposé parallèlement et à distance du bras transversal (6, 6'), relie les bras de pivotement (5, 5') sur une face de ceux-ci opposée au co utea u (2, 2').

5. Ensemble de couteaux selon l'une des revendications 1 à 4, **caractérisé en ce que** les couteaux (2, 2') présentent chacun un flanc de couteau (8, 8') qui est monté, sur le levier de co utea u (7, 7'), à rotation autour d' un premier axe de rotation (D1) dans la direction longitudinale (L) du levier de co utea u (7, 7'), et sur lequel la lames de couteaux (9, 9') est montée sur une face opposée a u levier de co utea u (7, 7').

6. Ensemble de couteaux selon la revendication 5, **caractérisé en ce que** les lames de couteaux (9, 9') sont fixées, sur le flanc de co utea u (8, 8'), à rotation autour d' un deuxième axe de rotation (D2)

7. Ensemble de couteaux selon la revendication 6, **caractérisé en ce que** le premier axe de rotation (D1) et le deuxième axe de rotation (D2) sont orientés parallèlement.

8. Ensemble de couteaux selon l'une des revendications 1 à 7, **caractérisé en ce qu'**un dispositif de maintien (22) pour le positionnement des couteaux (2, 2') est disposé en agencement divergeant de l'orientation verticale entre l'un des deux couteaux (2,2') et le support fixe (3) et / ou un autre élément de support fixe (21), sachant que ledit dispositif de maintien (22) dispose de moyens élastiques de telle manière que les couteaux (2, 2') soient maintenus pivotés dans le plan de pivotement (S).

9. Ensemble de couteaux selon la revendication 8, **caractérisé en ce que** des éléments à ressort (24) sont prévus en tant qu'éléments élastiques.

10. Ensemble de couteaux selon l'une des revendications 1 à 9, **caractérisé en ce qu'** un élément de renvoi est prévu pour le rappel automatique des co utea ux (2, 2') de la position d'épluchage dans la position de base.

11. Ensemble de couteaux selon la revendication 10, **caractérisé en ce que** l'élément de rappel est réalisé en forme de ressort de rappel (4) qui est disposé entre les couteaux (2, 2') et dont les deux sections d'extrémité sont reliées chac une à l' un des de ux co utea ux (2, 2').

12. Ensemble de couteaux selon l'une des revendications 1 à 11, **caractérisé en ce qu'** un élément de rappel est prévu pour le retour automatique des lames de couteaux (9, 9') dans la position de base et / ou qu' un élément de rappel est prévu pour le retour automatique des flancs de couteaux (8, 8') dans la position de base.

13. Ensemble de couteaux selon l'une des revendications 4 ou 5 jusqu'à 12, si dépendant de la revendication 4, **caractérisé en ce que** les bras transversaux (6, 6') s'étendent perpendiculairement à la direction longitudinale (L) du levier de couteau (7,7').

14. Ensemble de couteaux selon l'une des revendications 1 à 13, **caractérisé en ce que** la direction (E) dans laquelle s'étendent les lames de couteaux (9, 9') est perpendiculaire à la direction de transport (T) du produit à éplucher.

15. Utilisation d' un ensemble de couteaux selon l'une des revendications 1 à 14 dans un dispositif d'épluchage pour éplucher des produits à éplucher (30) allongée, en particulier des concombres, avec une pluralité d' unités de coupe (20) qui présentent des ensembles de couteaux (1), décalés angulairement par rapport à la direction de transport (T), et avec une pluralité d' unités de transport destinées à transporter, dans la direction de transport (T), le produit à éplucher (30) allongé, sachant que la pluralités d'unités de coupe (20) et la pluralité d'unités de transport sont disposées alternativement, les unes derrière les autres dans la direction de transport (T).
